# EUROPÄISCHE PATENTSCHRIFT

(11) **EP 0 519 345 B1**
(45) Veröffentlichungstag und Bekanntmachung des Hinweises auf die Patenterteilung: **19.04.1995**
(21) Anmeldenummer: 92109916.4
(22) Anmeldetag: 12.06.1992
(51) Int. Cl.: B25B 27/02, B23P 19/02

(54) **Verfahren und Einrichtung zum Ziehen eines Rohrstückes aus einem Wärmetauscher**
Method and device for pulling a tube from a heat exchanger
Procédé et dispositif pour tirer un tube à partir d'un échangeur de chaleur

(30) Priorität: 19.06.1991 DE 4120349; 19.06.1991 DE 4120351; 15.02.1992 DE 4204657
(43) Veröffentlichungstag der Anmeldung: 23.12.1992
(73) Patentinhaber: ABB Reaktor GmbH, D-68167 Mannheim (DE)
(72) Erfinder: Haller, Hans, W-6800 Mannheim (DE); Ziegelmeyer, Fritz, W-7525 Bad Schönborn (DE); Knierriem, Leonhard, W-6120 Erbach (DE)
(74) Vertreter: Rupprecht, Klaus, Dipl.-Ing.

(56) Entgegenhaltungen:
- EP-A- 0 139 494

## Beschreibung

Die Erfindung betrifft ein Verfahren zum Ziehen eines Rohrstückes aus einem Wärmetauscher, wobei eine Ziehkralle im Bereich eines Rohrbodens des Wärmetauschers in das Rohrstück eingeschraubt wird, die Ziehkralle bzw. das Rohrstück von hydraulisch gesteuerten Klemmbacken, die in einem Klemmbackenhalter angeordnet sind, beaufschlagt wird, ein Teil des gezogenen Rohrstückes abgetrennt wird und wobei eine der Ziehkraft entsprechende Gegenkraft auf den Rohrboden wirkt.

Ein derartiges Verfahren ist aus der EP 0 169 471 B1 bekannt. Der koaxial zur Ziehkralle angeordnete hydraulische Linearantrieb führt zu einer langgestreckten Bauweise, die bei einer kalottenartig ausgebildeten Wärmetauscherkammer zu Platzproblemen führt. Die starre Anordnung der Einrichtung relativ zum Rohrboden des Wärmetauschers kann bei Fluchtabweichungen zwischen Rohrstück und Ziehkralle zu Schäden am Rohrstück oder der Einrichtung führen. Eine darüberhinaus fehlende Kontrolle der Ziehkraft kann weitere Schäden hervorrufen.

Es stellt sich die Aufgabe, ein Verfahren der eingangs genannten Art anzugeben, das eine exakte Kontrolle der Ziehkraft und der Ziehbewegung ermöglicht und zu einer kompakt ausgebildeten Einrichtung führt.

Gelöst wird diese Aufgabe erfindungsgemäß dadurch, daß der Klemmbackenhalter dezentral an diametral gegenüberliegenden Stellen mit der Ziehkraft beaufschlagt wird, daß die auf den Rohrboden wirkende Gegenkraft gemessen und mit einem Sollwert der Ziehkraft verglichen wird, und daß beim Ziehvorgang ständig der axiale Bewegungsablauf von Rohrstück und Klemmbackenhalter miteinander verglichen wird.

Durch die dezentrale Ziehkraftbeaufschlagung wird die Ziehkraft von zwei Hydraulikzylindern aufgebracht, so daß der Klemmbackenhalter und die Trennvorrichtung zwischen den Hydraulikzylindern angeordnet werden kann, was eine niedrige Bauweise ergibt. Mit der unmittelbaren Überwachung der Gegenkraft am Rohrboden gelingt eine exakte BeStimmung der für den fehlerfreien Ablauf des Ziehvorganges notwendigen Ziehkraft. Die voneinander unabhängigen Wegemessungen lassen Unregelmäßigkeiten, wie z.B. ein Schlupf an der Backenklemmung, erkennen.

Ein unkontrolliertes Einschrauben der Ziehkralle kann beispielsweise dazu führen, daß das Rohrstück zu stark an die Wandung der Rohrplattenbohrung gedrückt wird, und das Ausziehen erschwert. Zur Vermeidung ist vorgesehen, daß beim Einschrauben der Ziehkralle das Drehmoment in Abhängigkeit der Zahl der Ziehkrallenumdrehungen mit einem Sollwert verglichen wird.

In der Regel werden Rohrstücke gezogen, die einen Material- oder Korrosionsschaden (Fehlerstelle) aufweisen, um bei einer Untersuchung des gezogenen Rohrstückes die Ursachen solcher Fehlerstellen zu ergründen. Damit diese Fehlerstellen nicht durch eine Einwirkung der Klemmbacken verfälscht werden, ist vorgesehen, daß die Greifposition der Klemmbacken am Rohrstück unter Aussparung der vor Beginn des Ziehvorganges dokumentierten Fehlerstellen im Rohrstück bestimmt wird.

Die diametral gegenüberliegenden Stellen werden mit einstellbarer Ziehkraft beaufschlagt, um einen unterschiedlichen Reibungsverlust in den zwei parallel angeordneten Hydraulikzylindern auszugleichen.

Um nach dem Abtrennen eines Teiles des Rohrstückes denselben einer bestimmten Rohrposition im Wärmetaucher zuordnen zu können und auch die Lage der Fehlerstelle innerhalb des Wärmetauschers nachvollziehen zu können, wird ein teilweise gezogenes Rohrstück vor dem Abtrennen mit einem Markierungsträger bestückt, der eine bei jedem Rohrstück gleiche Position einnimmt.

Das Rohrstück wird oberhalb des Klemmbackenhalters abgetrennt, wodurch beim Abtrennen das Rohrstück fibrationsfrei gehalten ist.

Eine Zieheinrichtung ist über einen Stützkörper in einer parallel zum Rohrboden erstreckten Halteplatte pendelnd aufgehängt, womit eine exakte Zentrierung der Ziehkralle unterstützt wird. An zwei vom Stützkörper diametral gegenüberliegend auskragenden Armen ist je ein Hydraulikzylinder pendelnd aufgehängt. Die freien Kolbenstangenenden der Hydraulikzylinder sind jeweils an einem vom Klemmbackenhalter in gleicher Weise auskragenden Armen um einen Bolzen schwenkbar befestigt. Eine Kraftmeßdose zur Bestimmung der exakten, gerade aufgewendeten Ziehkraft ist koaxial zum Rohrstück zwischen der Rohrplatte und dem Stützkörper angeordnet. Eine erste Wegemeßeinrichtung ist oberhalb des Stützkörpers dem zu ziehenden Rohrstück zugeordnet und eine zweite Wegemeßeinrichtung ist einem Hydraulikzylinder beigestellt. Die vom Stützkörper auskragenden Arme bilden zusammen eine Ausgleichstraverse, die drehbeweglich am Stützkörper gelagert ist. Mit dieser Maßnahme werden unterschiedliche Zylinderwege auf einfache Weise kraftneutral ausgeglichen, weil mit der parallelogrammartig beweglichen Befestigungsart der hydraulischen Ziehzylinder über die am Stützkörper drehbeweglich gelagerte Ausgleichstraverse die Ziehkraft auf die Längsachse des zu ziehenden Rohrstückes zentriert wird.

Die Trennvorrichtung ist oberhalb und ein Magazin zur Aufnahme von Markierungsträgern ist unterhalb des Klemmbackenhalters angeordnet. Damit erfolgt das Ziehen, Markieren und Trennen des Rohrstückes mit einer einzigen kompakten Einrichtung.

Zur selbständigen Steuerung der Zylinderwege innerhalb des Schwenkbereichs der Ausgleichstraverse ist vorgesehen, daß in Höhe des Stützkörpers ein Träger zur Aufnahme von Endschaltern vorgesehen ist, die beim Anlaufen an ein Widerlager die Zufuhr von hydraulischen Steuermedium beeinflussen.

Die entlüftbar ausgebildete Kraftmeßdose ist mit einem Meßwandler verbunden, der einen Vergleich mit einer Sollkraft und einen Eingriff in die Steuerung der Ziehkraft ermöglicht.

Zur Reduzierung der Bauhöhe der Einrichtung ist der Ziehkralle ein mit ihr kuppelbares Verlängerungsstück zugeordnet, das nach dem ersten Ziehschritt entfernt werden kann. Damit das letzte Teilstück eines Rohrstückes, das mitunter schon lose im Rohrboden sitzt, nicht herausfallen kann, ist vorgesehen, daß der Stützkörper an seinem der Halteplatte zugewandten Ende ein pneumatisch betätigbares, an dem ausgezogenen Teil des Rohrstückes anlegbares, Spannelement aufnimmt.

Die oberhalb des Klemmbackenhalters angeordnete Trennvorrichtung zeichnet sich dadurch aus, daß die Halter der am Außenumfang des Rohrstückes angreifenden Schneidräder in einem Träger radial beweglich geführt sind,wobei der über einen Antrieb in Umlauf gebrachte Träger in einem Gehäuse angeordnet ist, das einen Anschlag zur Steuerung der Radialbewegung der Halter aufweist, daß das Gehäuse stätionär in einem Aufnahmekörper angeordnet ist, wobei das Gehäuse den Antrieb zur Erzeugung der Umlaufbewegung des Trägers aufnimmt, daß jeder Halter an seinem dem Schneidrad abgewandten Ende als Gewindebolzen ausgebildet ist, der ein mit einem entsprechenden Innengewinde versehenes Stellrad trägt, das in seiner Achsrichtung betrachtet, im Träger festgelegt ist, und daß das Gehäuse an seiner dem Träger zugewandten Seite mit wenigstens einem Nocken versehen ist, der in eine malteserkreuzartig ausgebildete Umfangsfläche des Stellrades eingreift. Während der Drehbewegung des Trägers werden die Stellräder nacheinander bei einem Kontakt mit einem Nocken um ca. 90° gedreht, so daß nach einem kontinuierlichen Eindringen des Schneidrades und gleichzeitigen Schneiden eine Ruhepause eintritt, bei der nur ein Schneidvorgang und kein Eindringvorgang erfolgt. Der Einsatz von mehreren Nocken führt zu einem schnellen Eindringen der Schneidräder in das Rohr je Trägerumdrehung. Wegen seiner stationären Anordnung kann das Gehäuse den Antrieb aufnehmen und führt somit zu einer einfach aufgebauten kompakten Einrichtung.

Zur Erzielung einer vereinfachten Herstellung des Trägers ist vorgesehen, daß der Träger aus Drehteller und einer in das Gehäuse ragenden Nabe besteht.

Vorzugsweise ist die lösbare Verbindung zwischen der Einrichtung und dem Aufnahmekörper als Kugelkupplung ausgebildet, deren Haltering mit Hilfe von dem Aufnahmekörper zugeordneten Spannzylindern bewegbar ist.

Eine weitere Ausgetaltung sieht vor, daß zwischen dem Gehäuse und dem Aufnahmekörper eine Buchse angeordnet ist, die mit dem Gehäuse verbunden ist und zur Aufnahme der Kugelkupplung dient.

Mittlerweise sind die Prüfanforderungen gestiegen, so daß die Entfernung eines bis zu 9 m langen Rohrstückes erforderlich sein kann. Je nach den Anforderungen sind daraus eine mehr oder weniger große Anzahl von Teilen zur Analyse bereitzustellen. Die abzutrennenden Teile müssen zuverlässig markiert werden, um die Zuordnung zu der ursprünglichen Position im Wärmetauscher erkennen zu können.

Damit die Markierung vor dem Abtrennen erfolgen kann, ist das Magazin unterhalb des Klemmbackenhalters angeordnet und mit einer Vielzahl unter Vorspannung senkrecht zur Rohrachse verschiebbarer Markierungsträger bestückt, wobei der Markierungsträger eine aus zwei der Rohrinnen- oder Rohraußenwand zuzuordnenden Schenkeln bestehende Klammer ist, die zur Stirnseite des Rohres hin offen ausgebildet ist. Das Magazin besteht aus einem als Vierkantrohr ausgebildeten Gehäuse, das an seiner dem Rohr abgewandten Seite mit einer Kappe verschlossen ist und weist an seiner dem Rohr zugewandten Seite zwei von gegenüberliegenden Seiten aus in die lichte Querschnittsfläche des Gehäuses ragende Anschläge auf, an denen der der Außenwand zuzuordnende Schenkel des Markierungsträgers zur Anlage kommt.

Der an den Anschlägen unter Vorspannung zur Anlage kommende Schenkel bildet ein Widerlager beim Einführen des Rohres in den Markierungsträger. Nach abgeschlossenem Einführvorgang wird bei andauernder Ziehbewegung die Haltekraft zwischen Schenkel und Anschlägen überwunden und der Markierungsträger aus dem Magazin senkrecht zu dessen Achse ausgeschoben, so daß nach erfolgtem Trennen der für das nächste Rohrstück bestimmte Markierungsträger bis zur Anlage seines Schenkels an den Anschlägen herangeführt werden kann.

Zur Erleichterung der Einfahrbewegung des Rohres ist der der Rohrinnenwand zugeordnete Schenkel des Markierungsträgers als federnde Zunge ausgebildet.

Der einem Schenkel zugeordnete Noppen sichert den Markerungsträger vor dem unerwünschten Herausfallen bei der Handhabung. Wird das Rohrstück zur Analyse im Labor vorgesehen, so muß der Markierungsträger vor der Analyse entfernt werden. Die Kratzspur gibt dann noch Aufschluß über die Position des Markierungsträgers und somit über die Position dieser markierten Stelle in seiner ursprünglichen Position im Wärmetauscher.

Zur Verbeserung der Lagesicherung des Markierungsträgers bei der Herstellung seiner Verbindung mit dem Rohr ist ein als Widerlager wirkendes federndes Druckstück an der Außenseite des Magazins angeordnet. Die einstellbare Federkraft ist so bemessen, daß erst nach vollzogener Verbindung zwischen Rohr und Markierungsträger die in Achsrichtung des Rohres erfolgende Ausfahrbewgung des Markierungsträgers aus dem Magazin erfolgen kann.

Das federnde Druckstück ist vorzugsweise unter Beaufschlagung mit einer Druckfeder in einem am Magazin befestigten Halter geführt, wobei es an seinem dem Rohr zugewandten Ende als Gabelstück ausgebildet ist, das eine Rolle aufnimmt.

Anhand eines Ausführungsbeispieles und der schematischen Figuren 1 bis 12 wird ein Verfahren und eine Einrichtung zum Ziehen eines Rohrstückes aus einem Wärmetauscher beschrieben.

Dabei zeigt die
- Fig. 1: einen Längsschnitt durch eine Zieheinrichtung,
- Fig. 2: eine Einzelheit II der Fig. 1 in einem größeren Maßstab,
- Fig. 3: eine Frontansicht der Einrichtung,
- Fig. 4: einen Längsschnitt durch die Trennvorrichtung,
- Fig. 5: eine Ansicht in Pfeilrichtung II der Fig. 4,
- Fig. 6: den Bewegungsablauf eines Stellrades einer Trennvorrichtung nach Fig. 4 + 5,
- Fig. 7: einen Längsschnitt durch ein dem Klemmbackenhalter nachgeordnetes Magazin mit Markierungs trägern,
- Fig. 8: einen Querschnitt durch das Magazin entlang der Linie II-II der Figur 7,
- Fig. 9: eine Seitenansicht eines Markierungsträgers,
- Fig. 10: eine Ansicht in Pfeilrichtung IV der Figur 9,
- Fig. 11: einen Längsschnitt durch ein Rohr mit einem Markierungsträger und
- Fig. 12: einen Schnitt entlang der Linie VI-VI der Figur 7.

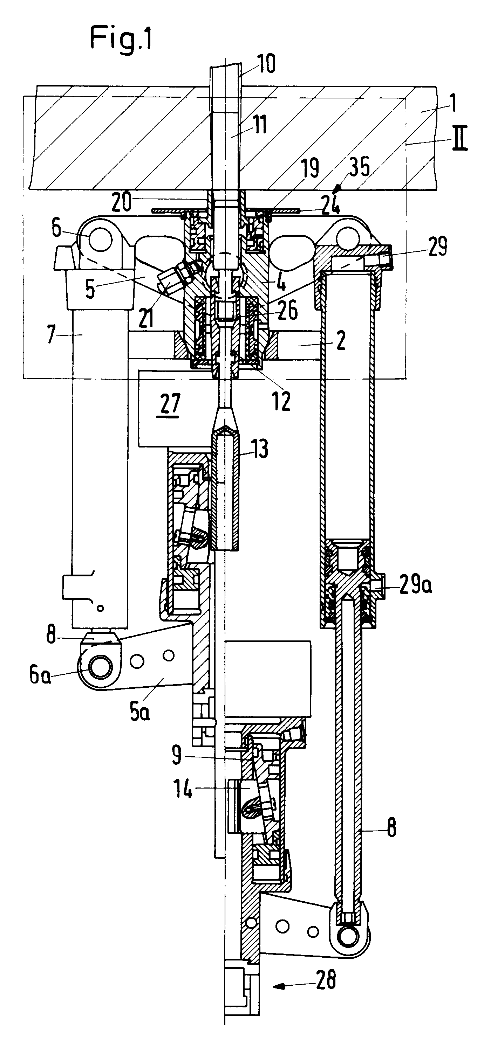

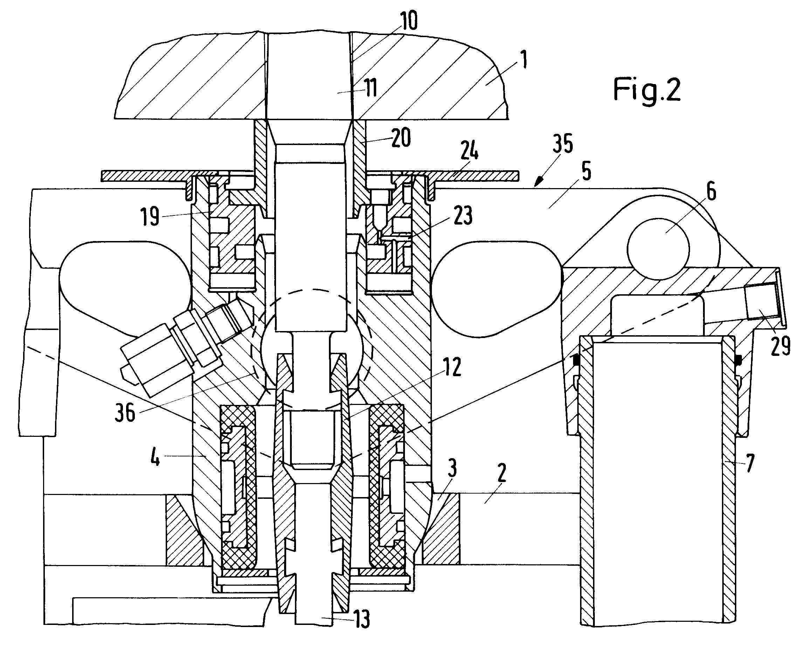

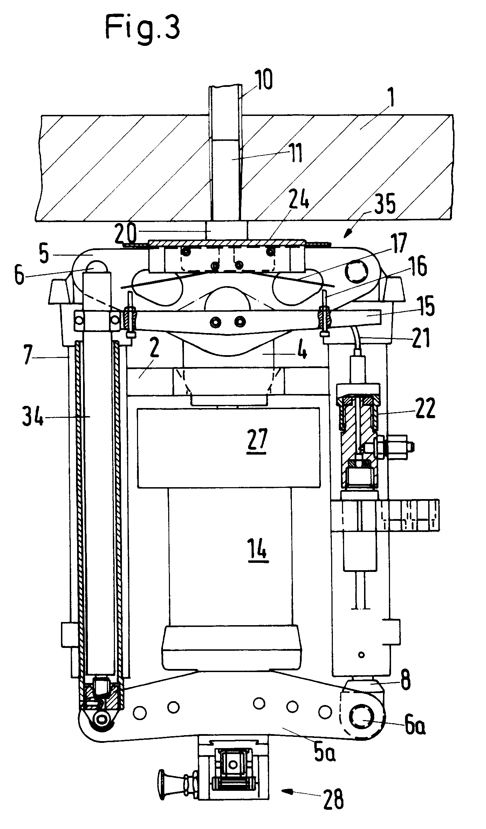

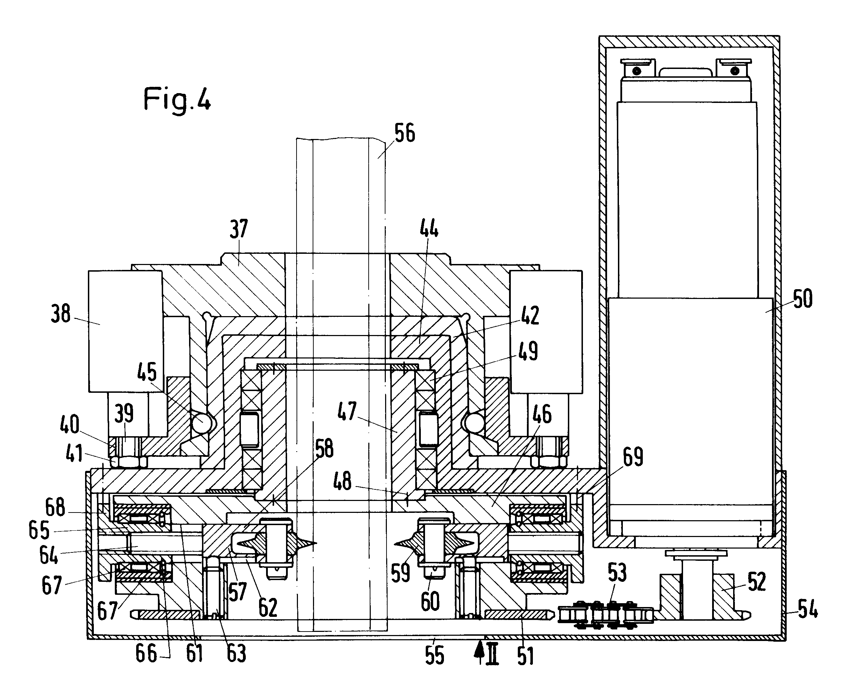

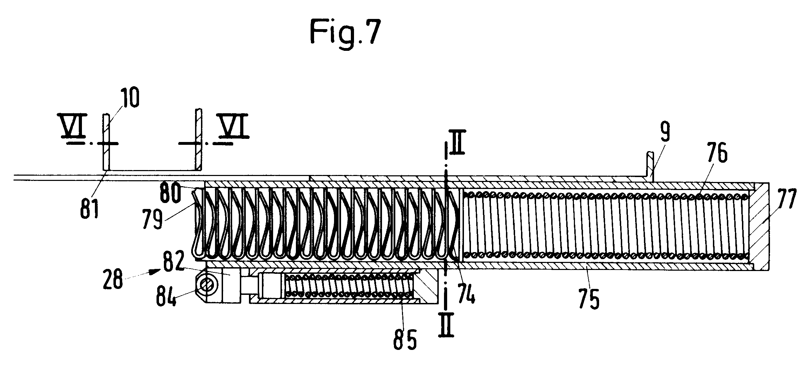

Die Figur 1 zeigt die Zieheinrichtung in einer Position vor und nach dem Ziehvorgang. In der Figur 2 wird eine Einzelheit der Figur 1 in einem größeren Maßstab und in der Figur 3 die Zieheinrichtung vor dem Ziehvorgang dargestellt. Eine parallel zum Rohrboden 1 erstreckte Halteplatte 2, die von einem nicht dargestellten Manipulator in dieser Position gehalten ist, weist einen mit schräg zulaufenden Seitenflächen versehenen Durchbruch 3 auf. Die schräg zulaufenden Seitenflächen dienen zur Auflage eines mit ballig ausgebildetenen Auflageflächen (Fig. 2) versehenen Stützkörpers 4, so daß eine pendelfähige Aufhängung entsteht. Von dem Stützkörper kragt nach gegenüberliegenden Seiten je ein Arm 5 aus, der von einem Bolzen 6 zur pendelnden Aufhängung eines Hydraulikzylinders durchsetzt ist. Die beiden Arme 5 bilden zusammen eine Ausgleichstraverse, die drehbeweglich am Stützkörper 4 gelagert ist. In der Figur 2 ist eine Lagerstelle 36 für die Ausgleichstraverse 35 angedeutet. Das freie Ende der Kolbenstange 8 des Hydraulikzylinders ist über einen Bolzen 6a ebenfalls schwenkbar an einem in gleicher Weise von gegenüberliegenden Seiten eines Klemmbackenhalters 9 auskragenden Arm 5a angelenkt. In ein im Rohrboden 1 eingewalztes Rohrstück 10 ist eine Ziehkralle 11 mit Hilfe eines nicht dargestellten motorgetriebenen Werkzeuges eingeschraubt. An seinem vom Rohrboden 1 weggerichteten Ende ist unter Verwendung einer Schiebehülse 12 ein Verlängerungsstück 13 angekuppelt, an dem die im Klemmbackenhalter 9 hydraulisch verschiebbaren Klemmbacken 14 angreifen. Ein in der Figur 3 erkennbarer Träger 15 nimmt an seinen dem jeweiligen Hydraulikzylinder zugewandten Ende je einen Endschalter 16 auf, der bei ungleichmäßiger Längsbewegung eine Kolbenstange 8 an ein Widerlager 17 stößt und dort eine Schließ- bzw. Öffnungsbewegung eines nicht dargestellten Hydraulikventils zur Steuerung des Zylinderweges auslöst. Wie in der Figur 2 deutlicher zu erkennen ist, nimmt eine ringförmige Aussparung des Stützkörpers 4 eine Kraftmeßdose 19 auf, die die bei der Ziehbewegung zwischen einer Nabe 20 und dem Rohrboden 1 entstehenden und der Ziehkraft entsprechenden Gegenkraft mißt und über eine Verbindungsleitung 21 den Druck an einen in der Figur 3 angedeuteten Meßwandler 22 weiterleitet. Eine Entlüftungsleitung 23 durchsetzt die Kraftmeßdose 19. Oberhalb der Kraftmeßdose ist eine Deckscheibe 24 angeordnet. In Höhe der Nabe 20 ist eine nicht dargestellte Wegemeßeinrichtung zur Messung der ausgezogenen Rohrstücklänge vorgesehen. Zur Bestimmung des von den Hydraulikzylindern zurückgelegten Weges ist gemäß Figur 3 der Kolbenstange 9 des einen Hydraulikzylinders eine stangenförmige Wegemeßeinrichtung 34 zugeordnet. In einer dem Rohrboden 1 abgewandten Aussparung 25 des Stützkörpers 4 ist ein pneumatisch steuerbares Spannelement 26 angeordnet. Unterhalb der Halteplatte ist der Einrichtung eine in den Figuren 4 bis 6 näher dargestellte Trennvorrichtung 27 zugeordnet. Ein Magazin 28 zur Aufnahme von Markierungsträgern zur Kennzeichnung von abgetrennten Teilen des zu ziehenden Rohrstückes 10 ist unterhalb des Klemmbackenhalters 9 mit der Einrichtung verbunden und wird anhand der Figuren 7 bis 12 beschrieben.

Das Verfahren zum Ziehen eines Rohrstückes läuft wie folgt ab. Die Ziehkralle 11 wird mit Hilfe eines nicht dargestellten motorgetriebenen Werkzeuges mit einem in Abhängigkeit der Umdrehungsanzahl der Ziehkralle vorgegebenen Drehmoment das ständig mit Sollwerten verglichen wird, ein vorgegebenes Maß in das Rohrstück 10 eingeschraubt. Nachdem die Einrichtung in Position gebracht ist, werden die hydraulisch gesteuerten Klemmbacken 14 gegenüber dem Verlängerungsstück 13 in Position gebracht. Das hydraulische Steuermittel wird dem Hydraulikzylinder über die Bohrung 29 zugeführt. Nachdem die Nabe 20 an dem Rohrboden 1 zur Anlage gekommen ist, beginnt der Ziehvorgang, wobei die durch die Hydraulikzylinder aufgewendete Ziehkraft durch Messung der zwischen dem Rohrboden 1 und der Nabe 20 wirkenden Gegenkraft exakt kontrolliert wird. Eine voneinander abweichende Längsbewegung der Kolbenstangen 8 wird durch entsprechende Ansteuerung der Hydraulikventile über die Endschalter 16 ausgeglichen. Die parallelogrammartig bewegliche Befestigungsart der Hydraulikzylinder zentriert über die am Stützkörper drehbeweglich gelagerte Ausgleichstraverse die Ziehkraft auf Längsachse des zu ziehenden Rohrstückes. Dabei werden unterschiedliche Zylinderwege kraftneutral ausgelichen. Nach Beendigung des ersten Ziehschrittes werden die Klemmbacken gelöst und die Klemmbackenhalterung durch Beaufschlagung der Hydraulikzylinder über die Bohrung 29a (rechte Hälfte der Figur 1) in ihre Ausgangsstellung gebracht. Die Klemmbacken greifen jetzt bereits an der Ziehkralle 11 selbst an, so daß das Verlängerungsstück 13 entfernt werden kann. Nach Durchführung eines weiteren Ziehschrittes greifen die Klemmbacken das Rohrstück 10, so daß die Ziehkralle 11 entfernt werden kann. Unter Aussparung der vor dem Ziehen ermittelten Fehlerstellen im Rohrstück 10 wird nach einem Ziehprogrammfolgeplan die Greifposition der Klemmbacken festgelegt. Passiert das Rohrstück 10 das Magazin 28, so wird es mit einem Markierungsträger bestückt (Fig. 7 bis 12). Mit der Trennvorrichtung 27 (Fig. 4 bis 6) wird nach erfolgter Markierung ein Teil des Rohrstückes abgetrennt. Dabei hält das Spannelement 26 den verbleibenden Rest des Rohrstückes 10 solange in seiner Position, bis es von den Klemmbacken übernommen werden kann. Während des Ziehvorganges wird über den Vergleich der Wegemessungen von Rohrstück und Kolbenstange die richtige Klemmbackenposition überwacht.

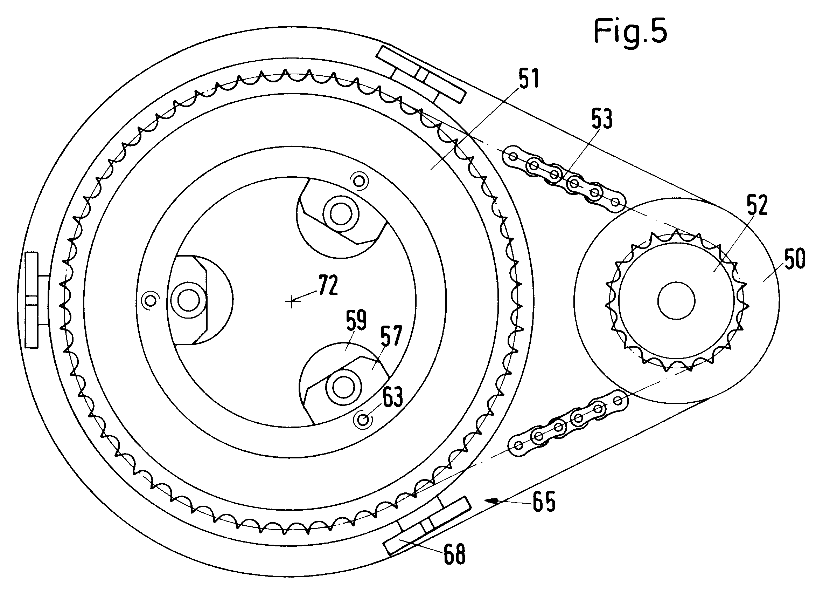

Der Längsschnitt durch die Einrichtung nach der Figur 4 zeigt einen Aufnahmekörper 37, der 180° versetzt zueinander zwei Pneumatikzylinder 38 trägt. Die Kolbenstangen 39 der Pneumatikzylinder durchsetzen einen Haltering 40, der mit Hilfe von Muttern 41 relativ zu den Kolbenstangen festlegbar ist. Eine topfförmig ausgebildete Buchse 42 ist zwischen dem Aufnahmekörper 37 und einem Gehäuse 44 angeordnet. Die Buchse geht mit dem Gehäuse eine Preßsitzverbindung ein, während zwischen dem Aufnahmekörper und der Buchse ein leichtgängiger Schiebesitz vorgesehen ist. Je nach der Position des Halteringes 40 wird über eine Kugel 45 eine Kupplungsverbindung hergestellt oder aufgehoben. Durch die Ausbildung der Buchse 42 aus Stahl kann das Gehäuse 44 aus dem relativ leichten Aluminium gefertigt sein. Das Gehäuse 44 nimmt einen als Drehteller ausgebildeten Träger 46 auf, der mit einer Nabe 47 eine Schraubverbindung 48 eingeht. Eine zwischen dem Gehäuse und der Nabe angeordnete Kugellagerreihe 49 hält den Träger 46 in seiner Position und sorgt für eine leichtgängige Drehbewegung. Zur Erzeugung der Drehbewegung des Trägers ist dem Gehäuse 44 ein Antrieb 50 zugeordnet. Dazu sindeine am Träger 46 befestigte Zahnscheibe 51 und ein dem Antrieb 50 zugeordnetes Kettenrad 52 über eine Kette 53 verbunden (Figur 4 und 5). Eine Abdeckhaube 54 übergreift den Träger und beläßt dabei lediglich eine Durchtrittsöffnung 55 für ein abzuschneidendes Rohr 56. Der Aufnahmekörper 37 ist ein stationärer Teil der Zieheinrichtung.

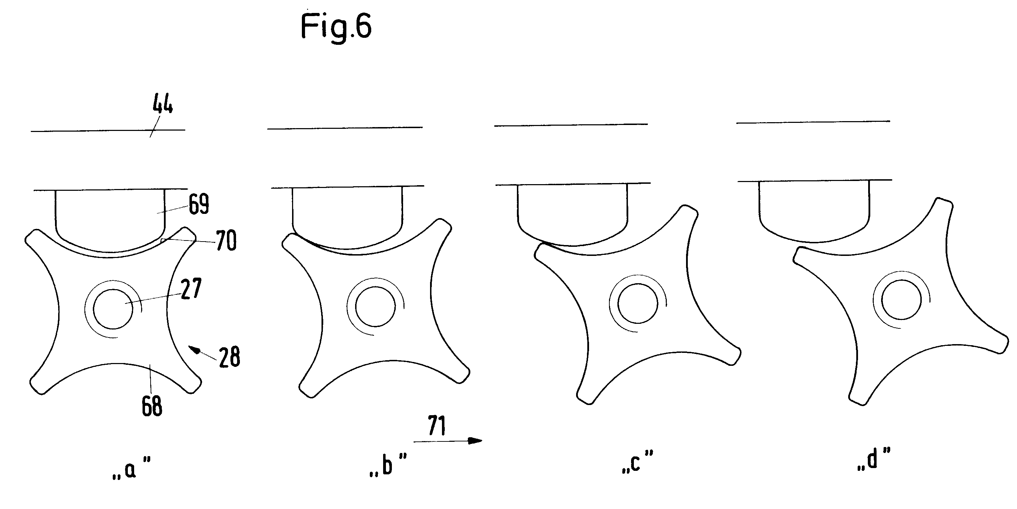

Wie im Zusammenhang mit der Figur 5 zu erkennen ist, sind um 120° versetzt drei Halter 57 über den Umfang des Trägers 46 verteilt angeordnet. Jeder Halter trägt in seinem als Gabel 58 ausgebildeten Ende ein Schneidrad 59, das um einen Lagerbolzen 60 drehbar gelagert und in der Gabel gehalten ist. In einer Bohrung 61 des Trägers 46 ist der Halter 57 radial beweglich geführt. Eine in einer Längsnut 62 eingreifende Stellschraube 63 verhindert eine Drehbewegung des Halters. An seinem dem Schneidrad abgewandten Ende ist jeder Halter als Gewindebolzen 64 ausgebildet. Ein Stellrad 65 ist mit einem dem Gewinde des Gewindebolzens antsprechenden Gewinde versehen und auf den Gewindebolzen aufgeschraubt. In einem koaxial zur Bohrung 61 angeordneten Absatz 66 ist das Stellrad 65 unter Zwischenschaltung von Kugellagern 67 gelagert und gegen axiale Bewegung gesichert. Ein Bund 68 des Stellrades 65 ist an seiner Umfangsfläche malteserkreuzartig ausgebildet (Figur 6) und gelangt während der Drehbewegung eine bestimmte Zeitspanne mit einem am Gehäuse 44 befestigten und daher stationär ausgebildeten Nocken 69 in Eingriff. In der Figur 6 ist der Bewegungsablauf des Stellrades während des Eingriffs mit dem Nocken 69 schematisch dargestellt. Mit seiner dem Stellrad zugewandten Teil entspricht die Kontur des Nockens der Kontur einer Mulde 70 des Stellrades, wobei zwischen diesen Konturen in der Stellung "a" nach der Figur 6 ein Spiel von einigen Zehnteln Millimetern vorhanden ist. Die Figur 6 zeigt den Bewegungsablauf eines Stellrades 65 während des Vorbeifahrens des Trägers 46 an den Nocken 69 in Pfeilrichtung 71. Ein Stellrad wird nach dem Durchlaufen der Stellungen "a" bis "d" um ca. 90° verdreht sein, was in Abhängigkeit der Geschwindigkeitssteigerung einer vorgebbaren Zustellbewegung des Schneidrades in Richtung des Zentrums 72 (Figur 2) der Einrichtung entspricht. Hat das Schneidrad seine Schneidposition erreicht, so wird während des Nockenkontaktes und damit während der Drehbewegung des Trägers 46 ein kontinuierliche Eindringbewegung des Schneidrades in das zu trennende Rohr erfolgen. Die kombinierte Eindring- und Schneidphase ist nach dem Vorbeifahren des Stellrades 65 an dem Nocken 63 (Position "d" der Figur 6) beendet. Es erfolgt nun bei der weiteren Drehbewegung des Trägers 46 eine reine Schneidphase bis dieses Stellrad wieder mit dem Nocken in Kontakt kommt. Jeweils nach einer zurückgelegten Drehbewegung des Trägers um 120° kommt das nächste Schneidrad zu seiner kombinierten Eindring- und Schneidbewegung sowie nach Passieren des Nockens zu seiner reinen Schneidphase. Die jeweils nicht von einem Nocken 69 gesteuerten Schneidräder dienen als Widerlager für das nur einendig eingespannte Rohr 56. Das Rohr wird somit von den jeweils "passiven" Schneidrädern geführt und bei einer trotzdem noch stattfindenden Auslenkung des Rohres im Zehntelmillimeter-Bereich bereits vorgeschnitten. Bei einer Zustellbewegung von 0,8 mm des gerade nockengesteuerten Schneidrades beträgt die Eindringbewegung der gerade "passiven" Schneidräder auf Grund der Rohrauslenkung ca. 0,2 mm.

Soll der Eindringvorschub des Schneidrades je Trägerumdrehung erhöht werden, sind auf der Kreisbahn, die der Bund 68 des Schneidrades 65 beschreibt, mehrere stationäre Nocken in vorgebbaren Abständen am Gehäuse 44 angeordnet.

Die linke Hälfte der Figur 4 zeigt den Halter 57 in seiner ausgefahrenen Position. Der maximale Ausfahrweg ist abhängig von dem Rohrdurchmesser- und Wandstärkenbereich, den die Einrichtung abdecken soll.

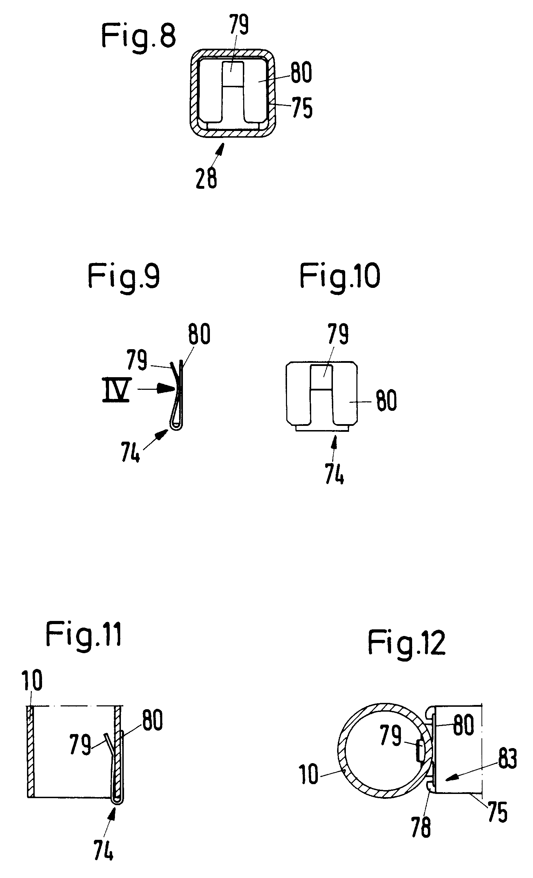

Die Figur 7 zeigt ein Magazin 28 zur Aufnahme von Markierungsträgern 74, das an der Unterseite des Klemmbackenhalters 9 befestigt ist. Das Magazin 28 besteht aus einem als Vierkantrohr ausgebildeten Gehäuse 75 zur Aufnahme einer Vielzahl von Markierungsträgern 74 und einer Druckfeder 76. Die Druckfeder 76 ist an einer Verschlußkappe 77 des Gehäuses 75 abgestützt und drückt das MarkierungsträgerPaket 74 mit einem dem Rohrstück 10 zugewandten Markierungsträger unter ständiger Vorspannung an zwei gegenüberliegende Anschläge 78 (Figur 12), die mit dem Gehäuse 75 verbunden sind. Wie insbesondere aus den Figuren 9 und 10 erkennbar ist, ist der Markierungsträger 74 als Klammer ausgebildet, die aus zwei Schenkeln 79, 80 besteht, wobei die Klammer nach der Stirnseite 81 des Rohrstückes 10 hin offen ist. Die Trennvorrichtung 27 und das Magazin 28 sind so zueinander angeordnet, daß die offene Seite des als Klammer ausgebildeten Markierungsträgers 74 mit einem Teil der Wandung des Rohrstückes 10 fluchtet. Bei Fortführung des Rohrziehvorganges fährt das Rohr mit dem besagten Wandungsteil in den ersten Markierungsträger des Markierungsträger-Paketes bis in die in der Figur 11 gezeigte Position ein. Der der Rohrinnenwand zugeordnete Schenkel 79 ist dabei als federnde Zunge ausgebildet, die in ihrer Breite nur etwa ein Drittel des in etwa den Innenquerschnitt des Gehäuses 75 (Figur 8) ausfüllenden anderen Schenkels 80 ausmacht. Der breitere, der Rohraußenwand zugeordnete Schenkel 80 liegt unter Vorspannung durch die Druckfeder 76 an den Anschlägen 78 an und reicht somit in der Regel zur Lagesicherung des Markierungsträgers aus, bis die Verbindung zwischen dem Rohrstück 10 und dem Markierungsträger 74 im Sinne der Figur 11 abgeschlossen ist. Eine Sicherung gegen unvollständiges Einschieben des Rohres in den Markierungsträger 74 bildet ein an der Unterseite des Gehäuses 75 befestigtes federndes Druckstück 82. Bei fortgeführtem Ziehvorgang wird der mit dem Rohrstück 10 verbundene Markierungsträger 74 senkrecht zur Achse des Gehäuses 75 aus den einen Aufnahmeschlitz 83 mit dem Gehäuse bildenden Anschlägen noch weiter herausgeschoben. Dabei kommt der Markierungsträger vor dem vollständigen Verlassen des Aufnahmeschlitzes 83 zwangsläufig in Kontakt mit einer im federnden Druckstück 82 gelagerten Rolle 84. Sie dient als Widerlager bis zum vollständigen Einfahren des Rohres in den Markierungsträger gemäß Figur 11, falls es noch nicht erfolgt ist. Die Feder 85 des Druckstückes 82 ist dabei so eingestellt, daß nach dem Anstoßen der Stirnseite 81 des Rohrstückes 10 an das geschlossene Ende des Markierungsträgers nach Figur 11 das weiter in Ziehbewegung befindliche Rohrstück 10 das Druckstück 82 zurückschiebt, so daß es zusammen mit dem Markierungsträger an den Bolzen vorbeigleitet. Die Länge der abzutrennenden, nunmehr markierten Rohrstücke muß mindestens so bemessen sein, daß der Markierungsträger mit seiner Oberkante mindestens unterhalb dem Gehäuse 75 zu liegen kommt. Nachdem das zu Prüfzwecken erforderliche Teil des Rohrstückes abgetrennt ist, gelangt mit Hilfe der Druckfeder 76 der für das nächste Teil des Rohrstückes 10 bestimmte Markierungsträger 74 mit seinem Schenkel 80 an den Anschlägen 78 zur Auflage, so daß das Markierungsverfahren in der beschriebenen Weise kontinuierlich und fernbedienbar weitergeführt werden kann.

Insbesondere dem der Rohraußenseite zugewandten Schenkel 80 ist an seiner Innenseite ein Noppen zugeordnet, der beim Einfahren des Rohrstückes 10 in einen Markierungsträger 74 eine Kratzspur auf der Rohraußenseite hinterläßt.

## Patentansprüche

1. Verfahren zum Ziehen eines Rohrstückes (10) aus einem Wärmetauscher, wobei eine Ziehkralle (11) im Bereich eines Rohrbodens (1) des Wärmetauschers in das Rohrstück (10) eingeschraubt wird, die Ziehkralle bzw. das Rohrstück von hydraulisch gesteuerten Klemmbacken (14), die in einem Klemmbackenhalter (9) angeordnet sind, beaufschlagt wird, ein Teil des gezogenen Rohrstückes (10) abgetrennt wird, und wobei eine der Ziehkraft entsprechende Gegenkraft auf den Rohrboden (1) wirkt, **dadurch gekennzeichnet,** daß der Klemmbackenhalter (9) dezentral an diametral gegenüberliegenden Stellen mit der Ziehkraft beaufschlagt wird, daß die auf den Rohrboden (1) wirkende Gegenkraft gemessen und mit einem Sollwert der Ziehkraft verglichen wird, und daß beim Ziehvorgang ständig der axiale Bewegungsablauf von Rohrstück (10) und Klemmbackenhalter (9) miteinander verglichen wird.

2. Verfahren nach Anspruch 1, dadurch gekennzeichnet, daß beim Einschrauben der Ziehkralle (11) das Drehmoment in Abhängigkeit der Zahl der Ziehkrallenumdrehungen mit einem Sollwert verglichen wird.

3. Verfahren nach Anspruch 1, dadurch gekennzeichnet, daß die Greifposition der Klemmbacken (14) am Rohrstück (10) unter Aussparung der vor Beginn des Ziehvorganges dokumentierten Fehlerstellen im Rohrstück bestimmt wird.

4. Verfahren nach Anspruch 1, dadurch gekennzeichnet, daß die diametral gegenüberliegenden Stellen mit einstellbarer Ziehkraft beaufschlagt werden.

5. Verfahren nach Anspruch 1, dadurch gekennzeichnet, daß das teilweise gezogene Rohrstück (10) vor dem Abtrennen mit einem Markierungsträger versehen wird.

6. Verfahren nach Anspruch 1, dadurch gekennzeichnet, daß das teilweise gezogene Rohrstück (10) oberhalb des Klemmbackenhalters (9) abgetrennt wird.

7. Einrichtung zum Ziehen eines Rohrstückes (10) aus einem Wärmetauscher mit einer im Bereich eines Rohrbodens (1) in das Rohrstück einschraubbaren Ziehkralle (11) mit an der Ziehkralle bzw. am Rohrstück angreifenden hydraulisch gesteuerten Klemmbacken (14) und mit einem Klemmbackenhalter (9), der eine hydraulisch erzeugte Ziehbewegung ausführt, wobei eine der Ziehkraft entsprechende Gegenkraft auf den Rohrboden wirkt und wobei eine Trennvorrichtung (27) zum Abtrennen eines gezogenen Teils des Rohrstückes (10) vorgesehen ist, dadurch gekennzeichnet, daß die Einrichtung über einen Stützkörper (4) in einer parallel zum Rohrboden (1) erstreckten Halteplatte (2) pendelnd aufgehängt ist, daß an wenigstens zwei vom Stützkörper (4) diametral gegenüberliegend auskragenden Armen (5) je ein drehbar aufgehängter Hydraulikzylinder (7) angeordnet ist, daß die freien Kolbenstangenenden der Hydraulikzylinder jeweils an einem vom Klemmbackenhalter (9) in gleicher Weise auskragenden Armen (5a) drehbar befestigt ist, daß zwischen dem Stützkörper (4) und dem Rohrboden (1) eine koaxial zum Rohrstück (10) angeordnete Kraftmeßdose (19) vorgesehen ist, und daß einem Hydraulikzylinder (7) und dem Rohrstück (10) je eine Wegemeßeinrichtung zugeordnet ist.

8. Einrichtung nach Anspruch 7, dadurch gekennzeichnet, daß die Trennvorrichtung (27) oberhalb und ein Magazin (28) zur Aufnahme von Markierungsträgern unterhalb des Klemmbackenhalters (9) angeordnet ist.

9. Einrichtung nach Anspruch 7 oder 8, dadurch gekennzeichnet, daß die gegenüberliegenden Arme (5) zusammen eine Ausgleichstraverse (35) bilden, die drehbeweglich am Stützkörper (4) gelagert ist.

10. Einrichtung nach Anspruch 7, dadurch gekennzeichnet, daß in Höhe des Stützkörpers (4) ein Träger (15) zur Aufnahme von Endschaltern (16) vorgesehen ist, die beim Anlaufen an ein Widerlager (17) die Zufuhr von hydraulischem Steuermedium beeinflussen.

11. Einrichtung nach Anspruch 7, dadurch gekennzeichnet, daß die Kraftmeßdose (19) entlüftbar ausgebildet und mit einem Meßwandler (22) verbunden ist.

12. Einrichtung nach Anspruch 7, dadurch gekennzeichnet, daß die Ziehkralle (11) mit einem kuppelbaren Verlängerungsstück (13) versehen ist.

13. Einrichtung nach Anspruch 7, dadurch gekennzeichnet, daß der Stützkörper (4) an seinem der Halteplatte (2) zugewandten Ende ein pneumatisch betätigbares, an dem ausgezogenen Teil des Rohrstückes (10) anlegbares Spannelement (26) aufnimmt.

14. Einrichtung nach Anspruch 8, dadurch gekennzeichnet, daß die Trennvorrichtung (27) am Außenumfang des Rohrstückes (10) angreifende Schneidräder (59) aufweist, deren Halter (57) in einem Träger (46) radial beweglich geführt sind, daß der über einen Antrieb in Umlauf gebrachte Träger (46) in einem Gehäuse (44) angeordnet ist, das einen Anschlag zur Steuerung der Radialbewegung der Halter (57) aufweist, daß das Gehäuse (44) stationär und lösbar in einem Aufnahmekörper (37) angeordnet ist, wobei das Gehäuse (44) den Antrieb (50) zur Erzeugung der Umlaufbewegung des Trägers (46) aufnimmt, daß jeder Halter (57) an seinem dem Schneidrad abgewandten Ende als Gewindebolzen (64) ausgebildet ist, der ein mit einem entsprechenden Innengewinde versehenes Stellrad (65) trägt, das in seiner Achsrichtung betrachtet im Träger (46) festgelegt ist, und daß das Gehäuse (44) an seiner dem Träger zugewandten Seite mit wenigstens einem Nocken (69) versehen ist, der in eine malteserkreuzartig ausgebildete Umfangsfläche des Stellrades (65) eingreift.

15. Einrichtung nach Anspruch 14, dadurch gekennzeichnet, daß der Träger (46) aus einem Drehteller und einer in das Gehäuse (44) ragenden Nabe (47) besteht.

16. Einrichtung nach Anspruch 14, dadurch gekennzeichnet, daß die lösbare Verbindung zwischen dem Gehäuse (44) und dem Aufnahmekörper (37) als Kugelkupplung ausgebildet ist, deren Haltering (40) mit Hilfe von dem Aufnahmekörper (37) zugeordneten pneumatischen Zylindern (38) bewegbar ist.

17. Einrichtung nach Anspruch 10, dadurch gekennzeichnet, daß zwischen dem Gehäuse (44) und dem Aufnahmekörper (37) eine Buchse (42) angeordnet ist, die mit den Gehäuse (44) verbunden ist und zur Aufnahme der Kugeln (45) der Kugelkupplung dient.

18. Einrichtung nach Anspruch 8, dadurch gekennzeichnet, daß das Magazin (28) unterhalb der Trennvorrichtung (27) angeordnet ist und eine Vielzahl unter Vorspannung senkrecht zur Rohrache verschiebbarer Markierungsträger (74) aufweist, daß jeder Markierungsträger eine aus zwei der Rohrinnen- Bzw. Rohraußenwand zuzuordnenden Schenkel (79, 80) bestehende Klammer ist, die zur Stirnseite (81) des Rohrstückes (10) hin offen ausgebildet ist, daß das Magazin (28) aus einem als Vierkantrohr ausgebildeten Gehäuse (78) besteht, das an einer dem Rohrstück (10) abgewandten Seite mit einer Kappe (77) verschlossen ist und an seiner dem Rohrstück (10) zugewandten Seite zwei von gegenüberliegenden Seiten aus in die lichte Querschnittsfläche des Gehäuses (75) ragende Anschläge (78) aufweist, an denen der der Außenwand zuzuordnende Schenkel (80) des Markierungsträgers (74) zur Anlage kommt.

19. Einrichtung nach Anspruch 18, dadurch gekennzeichnet, daß der der Rohrinnenwand zugeordnete Schenkel (79) als federnde Zunge ausgebildet ist.

20. Einrichtung nach Anspruch 18 oder 19, dadurch gekennzeichnet, daß einem Schenkel (79, 80) seiner der Rohrinnen- oder Rohraußenwand zugewandten Seite ein eine Kratzspur hinterlassender Noppen zugeordnet ist.

21. Einrichtung nach einem der Ansprüche 18, 19 oder 20, dadurch gekennzeichnet, daß ein an der Unterseite des Magazins (20) angeordnetes federndes Druckstück (82) als Widerlager bei der Herstellung der Verbindung zwischen dem Rohrstück (10) und Markierungsträger (74) dient.

22. Einrichtung nach Anspruch 21, dadurch gekennzeichnet, daß das federnde Druckstück (82) unter Beaufschlagung mit einer Druckfeder (85) in einem am Magazin (28) befestigten Halter geführt ist und an seinem dem Rohrstück (10) zugewandten Ende als Gabelstück ausgebildet ist, das eine Rolle (84) aufnimmt.

## Claims

1. Method of extracting a length of pipe (10) from a heat exchanger, wherein an extractor claw (11) is screwed into the length of pipe (10) in the region of a tube bottom (1) of the heat exchanger, the extractor claw and the length of pipe are subjected to the action of hydraulically controlled clamp jaws (14) disposed in a clamp jaw holder (9), a part of the length of pipe (10) subjected to traction is parted off, and wherein a counterforce corresponding to the tractive force acts on the tube bottom (1), characterised in that the clamp jaw holder (9) is subjected to the action of the tractive force non-centrally at diametrically opposite points, in that the counterforce acting on the tube bottom (1) is measured and compared with a desired value of the tractive force, and in that the axial movement sequence of the length of pipe (10) and that of the clamp jaw holder (9) are continuously compared with one another during the extraction process.

2. Method according to Claim 1, characterised in that during the screwing-in of the extractor claw (11) the torque is compared, in dependence on the number of revolutions of said claw, with a desired value.

3. Method according to Claim 1, characterised in that the gripping position of the clamp jaws (14) on the length of pipe (10) is selected to avoid defects in the length of pipe discovered before commencement of the extraction process.

4. Method according to Claim 1, characterised in that the diametrically opposite points are subjected to an adjustable tractive force.

5. Method according to Claim 1, characterised in that the partially extracted length of pipe (10) is provided, before being parted off, with a marking carrier.

6. Method according to Claim 1, characterised in that the partially extracted length of pipe (10) is parted off above the clamp jaw holder (9).

7. Apparatus for extracting a length of pipe (10) from a heat exchanger, comprising an extractor claw (11) adapted to be screwed into the length of pipe in the region of a tube bottom (1), hydraulically controlled clamp jaws (14) acting on the extractor claw or on the length of pipe, and a clamp jaw holder (9) which makes a hydraulically produced extraction movement, wherein a counterforce corresponding to the tractive force acts on the tube bottom, and wherein a parting-off device (27) is provided for parting off an extracted part of the length of pipe (10), characterised in that the apparatus is suspended so as to oscillate by means of a support (4) in a holding plate (2) extending parallel to the tube bottom (1), in that a hydraulic cylinder (7) is rotatably suspended on each of at least two diametrically opposite arms (5) projecting from the support (4), in that the free ends of the piston rods of the hydraulic cylinders are in each case fastened rotatably on a respective arm (5a), the arms projecting in the same way from the clamp jaw holder (9), in that between the support (4) and the tube bottom (1) a load cell (19) is disposed coaxially to the length of pipe (10), and in that respective displacement measuring devices are allocated in the one case to a hydraulic cylinder (7) and in the other case to the length of pipe (10).

8. Apparatus according to Claim 7, characterised in that the parting-off device (27) is disposed above the clamp jaw holder (9), and a magazine (28) holding marking carriers is disposed below said clamp jaw holder (9).

9. Apparatus according to Claim 7 or 8, characterised in that the oppositely disposed arms (5) together form a balancing cross member (35), which is rotatably mounted on the support (4).

10. Apparatus according to Claim 7, characterised in that a carrier (15) holding limit switches (16), which act on the supply of hydraulic control medium when an abutment (17) is encountered, is disposed at the height of the support (4).

11. Apparatus according to Claim 7, characterised in that the load cell (19) is of a construction permitting the evacuation of air and is connected to a measurement transducer (22).

12. Apparatus according to Claim 7, characterised in that the extractor claw (11) is provided with an extension piece (13) which can be coupled.

13. Apparatus according to Claim 7, characterised in that the support (4) receives, at its end facing the holding plate (2), a pneumatically operated clamp means (26) which can be attached to the extracted part of the length of pipe (10).

14. Apparatus according to Claim 8, characterised in that the parting-off device (27) comprises cutting wheels (59) which act on the outer periphery of the length of pipe (10) and whose holders (57) are guided for radial movement in a carrier (46), in that the carrier (46) rotated by means of a drive is disposed in a casing (44) which has a stop for controlling the radial movement of the holders (57), in that the casing (44) is held stationarily and detachably in a holder body (37) and contains the drive (50) producing the rotary movement of the carrier (46), in that at its end remote from the cutting wheel each holder (57) is in the form of a threaded bolt (64) carrying an adjusting wheel (65) which is provided with a corresponding internal screwthread and which, viewed in its axial direction, is fastened in the carrier (46), and in that on its side facing the carrier the casing (44) is provided with at least one boss (69) engaging in a Maltese-cross-shaped peripheral surface of the adjusting wheel (65).

15. Apparatus according to Claim 14, characterised in that the carrier (46) consists of a turntable and a hub (47) which projects into the casing (44).

16. Apparatus according to Claim 14, characterised in that the detachable connection between the casing (44) and the holder body (37) is in the form of a ball coupling whose holding ring (40) is movable with the aid of pneumatic cylinders (38) associated with the holder body (37).

17. Apparatus according to Claim 10, characterised in that a bush (42), which is joined to the casing (44) and serves to receive the balls (45) of the ball coupling, is disposed between the casing (44) and the holder body (37).

18. Apparatus according to Claim 8, characterised in that the magazine (28) is disposed under the parting-off device (27) and contains a multiplicity of marking carriers (74) which are displaceable under initial stress at right angles to the axis of the pipe, in that each marking carrier is a clip consisting of two legs (79, 80) to be allocated to the inner and outer walls of the pipe respectively, and having an open construction in the direction of the end face (81) of the length of pipe (10), in that the magazine (28) consists of a casing (78) which is in the form of a square tube and on a side remote from the length of pipe (10) is closed by a cap (77) and on its side facing the length of pipe (10) has two stops (78) which project from opposite sides into the inside cross-sectional area of the casing (75) and against which the leg (80) of the marking carrier (74) which is to be allocated to the outer wall comes to bear.

19. Apparatus according to Claim 18, characterised in that the leg (79) allocated to the inner wall of the pipe is in the form of a spring tongue.

20. Apparatus according to Claim 18 or 19, characterised in that on its side facing the inner or outer wall of the pipe one leg (79, 80) is allocated a protuberance leaving behind a scratch mark.

21. Apparatus according to one of Claims 18, 19 or 20, characterised in that a resilient pressure member (82) disposed on the underside of the magazine (20) serves as abutment in the making of the connection between the length of pipe (10) and the marking carrier (74).

22. Apparatus according to Claim 21, characterised in that the resilient pressure member (82) is guided under the action of a compression spring (85) in a holder fastened to the magazine (28), and at its end facing the length of pipe (10) is in the form of a forked part receiving a roller (84).

## Revendications

1. Procédé pour extraire un tube (10) d'un échangeur de chaleur, dans lequel on visse une griffe d'extraction (11) dans le tube (10) dans la région d'une plaque tubulaire (1) de l'échangeur de chaleur, on serre la griffe d'extraction ou le tube au moyen de mâchoires de serrage (14) commandées hydrauliquement qui sont disposées dans un porte-mâchoires de serrage (9) et on tronçonne une partie du tube (10) extrait, une force antagoniste qui correspond à la force de traction étant appliquée sur la plaque tubulaire (1), caractérisé par le fait que l'on applique la force de traction sur le porte-mâchoires de serrage (9) en des points diamétralement opposés, par le fait que l'on mesure la force antagoniste qui agit sur la plaque tubulaire (1) et on la compare à une valeur de consigne pour la force de traction et par le fait qu'au cours du processus d'extraction on compare entre eux en continu le déplacement axial du tube (10) et du porte-mâchoires de serrage (9).

2. Procédé selon la revendication 1, caractérisé par le fait que lors du vissage de la griffe d'extraction (11), on compare à une valeur de consigne le couple en fonction du nombre de tours de ladite griffe d'extraction.

3. Procédé selon la revendication 1, caractérisé par le fait que l'on détermine la position de serrage des mâchoires (14) sur le tube (10) en épargnant les points défectueux du tube repérés avant le début de l'extraction.

4. Procédé selon la revendication 1, caractérisé par le fait que l'on applique une force de traction réglable en des points diamétralement opposés.

5. Procédé selon la revendication 1, caractérisé par le fait que le tube (10) partiellement sorti est pourvu d'un support de marquage avant son tronçonnage.

6. Procédé selon la revendication 1, caractérisé par le fait que l'on tronçonne le tube (10) partiellement sorti au-dessus du porte-mâchoires de serrage (9).

7. Dispositif pour extraire une tube (10) d'un échangeur de chaleur, comportant une griffe d'extraction (14) que l'on visse dans le tube dans la région d'une plaque tubulaire (1), des mâchoires de serrage (14) commandées hydrauliquement qui agissent sur la griffe d'extraction ou sur le tube, un porte-mâchoires de serrage (9) qui exécute un mouvement de traction commandé hydrauliquement, une force antagoniste qui correspond à la force de traction agissant sur la plaque tubulaire et un dispositif de tronçonnage (27) pour tronçonner un morceau du tube (10) extrait étant prévu, caractérisé par le fait que le dispositif est monté oscillant par l'intermédiaire d'un élément d'appui (4) sur une plaque support (2) qui s'étend parallèlement à la plaque tubulaire (1), par le fait qu'au moins deux bras (5) qui s'étendent dans des directions diamétralement opposées à partir de l'élément d'appui (4) portent chacun un vérin (7) hydraulique monté avec possibilité de rotation, par le fait que les extrémités libres des tiges des pistons des vérins hydrauliques sont fixées avec possibilité de rotation chacune sur un bras (5a) qui fait saillie de la même manière à partir du porte-mâchoires (9), par le fait qu'il est prévu entre l'élément d'appui (4) et la plaque tubulaire (1) une capsule dynamométrique (19) qui est coaxiale avec le tube (10) et par le fait qu'un dispositif de mesure de déplacement est associé respectivement à un vérin hydraulique (7) et au tube (10).

8. Dispositif selon la revendication 7, caractérisé par le fait que le dispositif de tronçonnage (27) est disposé au-dessus et un magasin (28) destiné à recevoir des supports de marquage est disposé en-dessous du porte-mâchoires de serrage (9).

9. Dispositif selon la revendication 7 ou la revendication 8, caractérisé par le fait que les bras (5) en vis-à-vis forment ensemble une traverse d'équilibrage (35) qui est montée avec possibilité de rotation sur l'élément d'appui (4).

10. Dispositif selon la revendication 7, caractérisé par le fait qu'il est prévu au niveau de l'élément d'appui (4) un support (15) destiné à recevoir des contacteurs de fin de course (16) qui lors de l'entrée en contact avec une butée (17) agissent sur l'arrivée de fluide hydraulique de commande.

11. Dispositif selon la revendication 7, caractérisé par le fait que la capsule dynamométrique (19) peut être mise à l'air libre et est connectée à un transducteur de mesure (22).

12. Dispositif selon la revendication 7, caractérisé par le fait que la griffe d'extraction (11) comporte une rallonge (13) qui peut être couplée.

13. Dispositif selon la revendication 7, caractérisé par le fait que l'élément d'appui (4), à son extrémité tournée vers la plaque support (2), reçoit un élément de serrage (26) qui est actionné pneumatiquement et peut être appliqué sur la partie sortie du tube (10).

14. Dispositif selon la revendication 8, caractérisé par le fait que le dispositif de tronçonnage (27) présente des molettes de coupe (59) qui agissent sur la surface périphérique extérieure du tube (10) et dont les porte-molettes (57) sont guidés avec possibilité de déplacement dans la direction axiale dans un support (46), par le fait que le support (46) mis en rotation au moyen d'un mécanisme d'entraînement est disposé dans un boîtier (44) qui comporte une butée destinée à commander le déplacement radial des porte-molettes (57), par le fait que le boîtier (44) est monté fixe, avec possibilité de démontage, dans un élément support (37), le boîtier (44) recevant le mécanisme d'entraînement (50) produisant la rotation du support (46), par le fait que chaque porte-molettes (57), à son extrémité éloignée de la molette de coupe est agencé sous forme de tige filetée qui porte une roue de réglage (65), laquelle roue de réglage est pourvue d'un filetage intérieur adapté et est immobilisée axialement dans le support (46) et par le fait que le boîtier (44) à son extrémité tournée vers le support est pourvu d'au moins une came (69) qui vient en prise avec une surface périphérique extérieure en forme de croix de Malte de la roue de réglage (65).

15. Dispositif selon la revendication 14, caractérisé par le fait que le support (46) se compose d'un plateau et d'un moyeu (47) qui pénètre dans le boîtier (44).

16. Dispositif selon la revendication 14, caractérisé par le fait que la liaison séparable entre le boîtier (44) et l'élément support (37) est agencée sous forme d'accouplement à bille dont la bague de retenue (40) peut être déplacée au moyen de vérins pneumatiques (38) associés audit élément support (37).

17. Dispositif selon la revendication 10, caractérisé par le fait qu'une douille (42) est disposée entre le boîtier (44) et l'élément support (37), laquelle douille est liée au boîtier (44) et est destinée à recevoir les billes (45) de l'accouplement à billes.

18. Dispositif selon la revendication 8, caractérisé par le fait que le magasin (28) est disposé en-dessous du dispositif de tronçonnage (27) et comporte une pluralité de supports de marquage (74) qui sont déplacés sous précontrainte perpendiculairement à l'axe du tube, par le fait que chaque support de marquage (74) est une agrafe formée de deux branches (79, 80) associées respectivement aux surfaces intérieure et extérieure du tube et ouverte en direction de la face frontale (81) du tube (10), par le fait que le magasin (28) est constitué d'un boîtier (78) en forme de tube carré qui, à une extrémité éloignée du tube (10), par une coiffe (77) et présente à son extrémité tournée vers le tube (10) deux butées (78) en vis-à-vis qui font saillie dans la section libre du boîtier (75) et sur lesquelles la branche (80) du support de marquage (74) associée à la surface extérieure de la paroi du tube vient en appui.

19. Dispositif selon la revendication 18, caractérisé par le fait que la branche (79) associée à la surface intérieure de la paroi du tube est agencée sous forme de languette élastique.

20. Dispositif selon la revendication 18 ou la revendication 19, caractérisé par le fait qu'un bouton qui laisse une rayure est associé à la face de l'une des branches (79, 80) qui est tournée vers la surface intérieure ou vers la surface extérieure de la paroi du tube.

21. Dispositif selon l'une des revendications 18, 19 ou 20, caractérisé par le fait qu'une pièce de pression (82) élastique disposée dans la partie inférieure du magasin (20) sert de contre-appui lors de la réalisation de la liaison entre le tube (10) et le support de marquage (74).

22. Dispositif selon la revendication 21, caractérisé par le fait que la pièce de pression (82) élastique sollicitée par ressort est montée dans un support fixé sur le magasin (28) et comporte à son extrémité tournée vers le tube (10) une partie en forme de fourchette qui reçoit un galet (84).
